Europäisches Patentamt

European Patent Office

Office européen des brevets

(19)

(11) **EP 1 355 959 B1**

(12) **FASCICULE DE BREVET EUROPEEN**

(45) Date de publication et mention
de la délivrance du brevet:
**23.11.2005 Bulletin 2005/47**

(21) Numéro de dépôt: **01984783.9**

(22) Date de dépôt: **28.11.2001**

(51) Int Cl.$^7$: **C08F 36/08**, C08F 4/54

(86) Numéro de dépôt international:
**PCT/EP2001/013928**

(87) Numéro de publication internationale:
**WO 2002/048218 (20.06.2002 Gazette 2002/25)**

(54) **PROCEDE D'OBTENTION D'UN POLYISOPRENE A TAUX ELEVE D'ENCHAINEMENTS CIS-1,4**

VERFAHREN ZUR HERSTELLUNG VON POLYISOPREN MIT HOHEM GEHALT AN CIS-1,4
KETTEN

METHOD FOR OBTAINING A POLYISOPRENE WITH HIGH CIS-1,4 CHAINING

(84) Etats contractants désignés:
**AT BE CH CY DE DK ES FI FR GB GR IE IT LI LU
MC NL PT SE TR**

(30) Priorité: **14.12.2000 FR 0016456**

(43) Date de publication de la demande:
**29.10.2003 Bulletin 2003/44**

(73) Titulaires:
- **Société de Technologie Michelin
  63000 Clermont-Ferrand Cedex 09 (FR)**
- **MICHELIN RECHERCHE ET TECHNIQUE S.A.
  CH-1763 Granges-Paccot (CH)**

(72) Inventeur: **LAUBRY, Philippe
F-63200 Marsat (FR)**

(74) Mandataire: **Bolinches, Michel Jean-Marie
M.F.P.
Michelin
SGD/LG/PI - F35 - Ladoux
F-63040 Clermont-Ferrand Cedex 09 (FR)**

(56) Documents cités:
**EP-A- 0 304 088          EP-A- 0 846 707
EP-A- 1 048 675**

- **DATABASE WPI Section Ch, Week 198343
  Derwent Publications Ltd., London, GB; Class
  A12, AN 1983-797434 XP002145523 & JP 58
  154705 A (ASAHI CHEM IND CO LTD), 14
  septembre 1983 (1983-09-14)**

EP 1 355 959 B1

# EP 1 355 959 B1

**Description**

La présente invention concerne un procédé d'obtention d'un polyisoprène présentant un taux élevé d'enchaînements cis-1,4, à partir d'une coupe C5 de vapocraquage de naphta enrichie en isoprène.

Les coupes C5 de vapocraquage de naphta contiennent usuellement de l'isoprène selon une fraction massique allant sensiblement de 10 % à 30 %. En outre, elles contiennent notamment les composés suivants :

- des mono-oléfines ($\alpha$-oléfines et $\beta$-oléfines), selon une fraction massique allant de 20 % à 40 %,
- des diènes tels que le cyclopentadiène, le 1,3-pentadiène (encore appelé pipérylène) et d'autres pentadiènes, selon une fraction massique allant usuellement de 20 % à 30 %,
- des alcanes,
- du limonène (dimère de l'isoprène) et, à titre minoritaire,
- des composés acétyléniques et aromatiques.

Pour pouvoir procéder à la polymérisation sélective de l'isoprène avec une activité élevée à partir d'une telle coupe C5 de vapocraquage de naphta, on doit au préalable enrichir cette dernière en isoprène pour que la fraction massique d'isoprène dans la coupe enrichie soit proche de 100 %. En effet, il s'avère que les autres composés précités nuisent au rendement de la réaction de polymérisation de l'isoprène. En particulier, cette coupe enrichie doit être pratiquement exempte de cyclopentadiène, qui est un poison pour les systèmes catalytiques.

D'une manière connue, cet enrichissement en isoprène de la coupe C5 de vapocraquage de naphta peut être obtenu en mettant en oeuvre les opérations suivantes.

On réalise en premier lieu une distillation fractionnée ou extractive (au moyen d'un solvant polaire) suivie d'une distillation sur de l'anhydride maléique, pour supprimer pratiquement le cyclopentadiène de la coupé initiale. Par la suite, on réalise par exemple une distillation sur de l'hydrure de diisobutylaluminium, pour faire disparaître pratiquement l'ensemble des composés acétyléniques de la coupe. On procède enfin à une élimination des impuretés polaires résiduelles, par exemple par un passage sur de l'alumine.

Pour l'obtention de polyisoprènes présentant un taux élevé d'enchaînements cis-1,4, il est connu d'utiliser un système catalytique à base de tétrachlorure de titane et d'un alkylaluminium. L'article de E. Schoenberg, H.A. Marsh, S.J. Walters, W.M. Saltman, Rubber Chemistry and Technology, 1979, vol. 52, pp. 564-565 indique que, si l'on utilise ce système catalytique pour polymériser l'isoprène, la coupe C5 de vapocraquage de naphta doit avoir été préalablement enrichie de manière à comprendre une fraction massique d'isoprène au moins égalé à 97 %.

Plus précisément, cet article enseigne que la fraction massique de mono-oléfines dans la coupe enrichie doit être au plus de 3,8 % (dont 1 % au plus pour les $\alpha$-oléfines et 2,8 % au plus pour les $\beta$-oléfines), et que celle du limonène doit être au plus de 0,1 %. De plus, la fraction massique de cyclopentadiène doit être au plus de 1 ppm (ppm : parties par million), celle du pipérylène au plus de 80 ppm, et celle des composés acétyléniques doit être au plus de 50 ppm.

Pour l'obtention de polyisoprènes présentant un taux élevé d'enchaînements cis-1,4, il est également connu d'utiliser des systèmes catalytiques à base :

- d'un sel de terre rare en solution dans un solvant hydrocarboné,
- d'un agent d'alkylation de ce sel constitué d'un alkylaluminium, et
- d'un halogénure d'un alkylaluminium.

Il est par exemple connu, d'après le document « Compte-rendu de l'Académie des Sciences d'U.R S. S., tome 234, n°5, 1977 (Y. B. Monakov, Y. R Bieshev, A. A. Berg, S. R. Rafikov) » d'utiliser un système catalytique comprenant:

- un sel de néodyme ou de praséodyme de l'acide bis(2-éthylhexyl)phosphorique, à titre de sel de terre rare, en solution dans du toluène,
- du triisobutylaluminium à titre d'agent d'alkylation, selon un rapport molaire (agent d'alkylation / sel de terre rare) égal à 20, et
- du chlorure de diéthylaluminium à titre d'halogénure d'un alkylaluzninium.

Comme dans le cas de systèmes catalytiques à base de titane, il s'avère que la polymérisation sélective de l'isoprène avec une activité élevée n'est envisageable qu'à partir d'une coupe C5 ayant été enrichie de manière à comprendre de l'isoprène selon une fraction massique proche de 100 %.

Cette extraction de la coupe C5 d'isoprène pratiquement pur présente l'inconvénient de nécessiter la mise en oeuvre d'un procédé de séparation complexe et, par conséquent, d'impliquer un coût opératoire relativement élevé en vue de la polymérisation de l'isoprène.

2

**EP 1 355 959 B1**

Le but de la présente invention est de pallier cet inconvénient, et il est atteint en ce que la demanderesse a découvert d'une manière inattendue qu'un système catalytique à base d'au moins :

- un monomère diène conjugué,
- un sel d'un ou plusieurs métaux de terre rare (métaux ayant un numéro atomique compris entre 57 et 71 dans le tableau périodique des éléments de Mendeleev) d'un acide phosphorique organique,
- un agent d'alkylation constitué d'un alkylaluminium répondant à la formule $AlR_3$ ou $HAlR_2$, et
- un donneur d'halogène constitué d'un halogénure d'alkylaluminium,

ledit sel étant en suspension dans au moins un solvant hydrocarboné inerte, saturé et de type aliphatique ou alicyclique qui est compris dans ledit système catalytique, et le rapport molaire (agent d'alkylation / sel de terre rare) appartenant à un domaine allant de 1 à 5,

permet la polymérisation sélective de l'isoprène avec une activité catalytique élevée pour l'obtention d'un polyisoprène à taux élevé d'enchaînements cis-1,4, à partir d'une coupe C5 de vapocraquage de naphta qui n'a été que peu enrichie en isoprène, comprenant une fraction massique d'isoprène aussi faible que 30 %.

Cette coupe C5 peu enrichie en isoprène peut être obtenue en mettant en oeuvre un procédé d'enrichissement simplifié consistant successivement :

- en une distillation simple ou extractive pour éliminer la majeure partie des diènes autres que l'isoprène, en particulier le cyclopentadiène,
- en une distillation sur de l'anhydride maléique pour éliminer pratiquement le cyclopentadiène résiduel,
- en une élimination des composés vinylacétyléniques (alcynes « vrais » résiduels) par une distillation sur de l'hydrure de diisobutylaluminium (HDiBA), et
- en un passage sur de l'alumine ou sur un tamis moléculaire pour éliminer les impuretés polaires résiduelles.

Selon une variante de réalisation de l'invention, cette coupe C5 peu enrichie en isoprène peut également être obtenue en mettant en oeuvre un procédé d'enrichissement simplifié consistant successivement :

- en la distillation simple ou extractive précitée pour éliminer la majeure partie des diènes autres que l'isoprène, en particulier le cyclopentadiène,
- en une élimination des composés vinylacétyléniques (alcynes « vrais » résiduels), par une réaction d'hydrogénation catalytique sélective,
- en une distillation sur de l'anhydride maléique pour éliminer pratiquement le cyclopentadiène résiduel, et
- en un passage sur de l'alumine ou sur un tamis moléculaire pour éliminer les impuretés polaires résiduelles.

On notera que cette polymérisation sélective et à rendement élevé se produit a *fortiori* à partir d'une coupe C5 davantage enrichie en isoprène, c'est-à-dire dans laquelle la fraction massique d'isoprène est supérieure à 30 %, celle-ci appartenant avantageusement à un domaine compris entre 30 % et 70 %. Bien entendu, cette fraction massique d'isoprène peut prendre des valeurs encore supérieures, par exemple atteignant 95 %.

Il résulte de la possibilité de simplifier l'opération de purification de cette coupe C5 une possibilité d'abaissement substantiel du coût global d'obtention des polyisoprènes.

Selon une autre caractéristique avantageuse de l'invention, cette coupe C5 enrichie comprend des mono-oléfines aliphatiques et alicycliques, le rapport massique (mono-oléfmes aliphatiques et alicycliques / isoprène) pouvant être inférieur ou égal à 50 % et étant par exemple compris entre 4 % et 50 % et, de préférence, entre 20 % et 50 %.

Selon une autre caractéristique avantageuse de l'invention, cette coupe C5 enrichie comprend, à titre de mono-oléfines, des $\alpha$-oléfines et des $\beta$-oléfines, le rapport massique ($\alpha$-oléfines / isoprène) pouvant être inférieur ou égal à 30 %, par exemple compris entre 1 % et 30 %, et le rapport massique ($\beta$-oléfines / isoprène) pouvant être inférieur ou égal à 20 %, par exemple compris entre 3 % et 20 %.

On notera que ladite coupe C5 enrichie comprend par ailleurs :

- du 1,3-pentadiène, le rapport massique (1,3 pentadiène / isoprène) pouvant être inférieur ou égal à 0,5 % et étant par exemple compris entre 0,01 % et 0,5 %,
- des alcynes disubstitués, le rapport massique (alcynes disubstitués / isoprène) pouvant être inférieur ou égal à 0,7 %, par exemple compris entre 0,01 % et 0,7 %,
- des composés vinylacétyléniques (encore appelés alcynes « vrais »), le rapport massique (vinylacétyléniques / isoprène) pouvant être inférieur ou égal à 15 ppm (parties par million) et étant par exemple compris entre 1 ppm et 15 ppm,
- du 1,4 pentadiène, le rapport massique (1,4 pentadiène / isoprène) pouvant être inférieur ou égal à 0,2 % et étant

**3**

par exemple compris entre 1 ppm et 2000 ppm,

- du cyclopentadiène, le rapport massique (cyclopentadiène / isoprène) pouvant être inférieur ou égal à 5 ppm et étant par exemple compris entre 1 ppm et 5 ppm, et

- du limonène, le rapport massique (limonène / isoprène) pouvant être inférieur ou égal à 2 % et étant par exemple compris entre 0,1 % et 2 %.

On notera que les constituants autres que l'isoprène dans la coupe C5 enrichie selon l'invention peuvent être présents dans cette coupe selon des fractions massiques qui sont très supérieures à celles des mêmes constituants des coupes C5 qui ont été enrichies de manière connue en isoprène en vue de la polymérisation de ce dernier, telles que la coupe C5 enrichie figurant dans l'article précité de E. Schoenberg, H.A. Marsh, S.J. Walters, W.M. Saltman, Rubber Chemistry and Technology, 1979, vol. 52, p.565, tout en permettant la polymérisation sélective de l'isoprène avec une activité catalytique élevée avec l'obtention d'un polyisoprène à taux élevé d'enchaînements cis-1,4.

On notera également que les polyisoprènes ainsi obtenus présentent des viscosités élevées.

Avantageusement, les polyisoprènes obtenus au moyen de ce système catalytique et de cette coupe C5 enrichie en isoprène présentent des taux d'enchaînements cis-1,4, mesurés selon les techniques de résonance magnétique nucléaire du carbone 13 et de dosage par moyen infrarouge, qui appartiennent à un domaine allant de 98,0 % à 99,6 %.

On notera que lorsque les polymérisations sont réalisées à des températures allant de 25° C à 55° C, les polyisoprènes obtenus au moyen du système catalytique selon l'invention présentent des taux d'enchaînements cis-1,4, mesurés selon l'une et l'autre de ces techniques, qui appartiennent à un domaine allant de 98,0 % à 98,5 %.

Avantageusement, lorsque les polymérisations sont réalisées à des températures qui sont inférieures ou égales à 5° C, les polyisoprènes obtenus au moyen dudit système catalytique présentent des taux d'enchaînements cis-1,4, mesurés selon les techniques de résonance magnétique nucléaire du carbone 13 et de dosage par moyen infrarouge, qui appartiennent à un domaine allant de 99,0 % à 99,6 %.

On notera que de telles polymérisations à basse température peuvent être mises en oeuvre dans un solvant hydrocarboné inerte, ou bien en masse, c'est-à-dire sans solvant.

Plus précisément, ce système catalytique permet, à des températures de polymérisation allant de -55° C à -20° C, d'obtenir des polyisoprènes dont les taux d'enchaînements cis-1,4, mesurés par l'une et l'autre des techniques précitées, appartiennent à un domaine allant de 99,3 % à 99,6 %.

A titre particulièrement avantageux, ce système catalytique permet, à des températures de polymérisation allant de -55° C à -45° C, d'obtenir des polyisoprènes dont les taux d'enchaînements cis-1,4, également mesurés par l'une et l'autre des techniques précitées, sont égaux à 99,6 %.

On notera que ces dernières valeurs de taux d'enchaînements cis-1,4 qui sont proches de la valeur de 100 % qui caractérise le caoutchouc naturel, n'ont jamais été réellement atteintes à ce jour.

On notera également que les valeurs précitées de taux d'enchaînements cis-1,4 tiennent compte de mesures établies au moyen, d'une part, de la technique de dosage par moyen infrarouge après un calibrage des échantillons de polyisoprène réalisé dans le cadre de l'analyse RMN[13]C et, d'autre part, de l'analyse RMN[13]C, les mesures obtenues par l'une de ces techniques étant confirmées par l'autre (à l'incertitude de mesure près de plus ou moins 0,1 %, qui est inhérente à chacune de ces deux techniques). La précision de ces valeurs de taux d'enchaînements cis-1,4 est ainsi accrue, par rapport à celle des valeurs de taux qui ont été mentionnées dans l'état de la technique à ce jour.

On notera en outre que le taux particulièrement élevé d'enchaînements cis-1,4 obtenu pour les polyisoprènes selon l'invention est indépendant de la quantité utilisée de système catalytique.

Il est à noter que les systèmes catalytiques selon l'invention sont caractérisés par un rapport molaire (agent d'alkylation / sel de terre rare) qui est extrêmement réduit par rapport aux rapports molaires égaux ou supérieurs à 20 qui ont été utilisés à ce jour ce qui, d'une manière surprenante, permet d'élever d'une manière significative l'activité de ces systèmes catalytiques selon l'invention.

De préférence, le système catalytique selon l'invention est tel que le rapport molaire (agent d'alkylation / sel de terre rare) présente une valeur allant de 1 à 2.

A titre de monomère diène conjugué utilisable pour « préformer » le système catalytique selon l'invention, on peut citer le 1, 3-butadiène, à titre préférentiel.

On peut également citer le 2-méthyl 1, 3-butadiène (ou isoprène), les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

On notera que le rapport molaire (monomère / sel de terre rare) peut présenter une valeur allant de 25 à 50.

Selon une autre caractéristique de l'invention, ledit sel de terre rare est constitué d'une poudre non hygroscopique ayant une légère tendance à s'agglomérer à la température ambiante.

- Selon un mode préférentiel de réalisation de l'invention, le solvant hydrocarboné inerte dans lequel ledit sel de terre rare est en suspension est un solvant aliphatique ou alicyclique de bas poids moléculaire, tel que le cyclohexane, le méthylcyclohexane, le n-heptane, ou un mélange de ces solvants.

- Selon un autre mode de réalisation de l'invention, le solvant utilisé pour la suspension du sel de terre rare est un mélange d'un solvant aliphatique de haut poids moléculaire comprenant une huile paraffinique, par exemple de l'huile de vaseline, et d'un solvant de bas poids moléculaire tel que ceux susmentionnés (par exemple le méthylcyclohexane).

On réalise cette suspension en procédant à un broyage dispersif du sel de terre rare dans cette huile paraffinique, de sorte à obtenir une suspension très fine et homogène du sel.
Selon une autre caractéristique de l'invention, ledit système catalytique comprend le métal de terre rare selon une concentration égale ou sensiblement égale à 0,02 mol/l.
Selon un exemple préférentiel de réalisation de l'invention, on utilise à titre de sel un tris[bis(2-éthylhexyl) phosphate] dudit ou desdits métaux de terre rare.
A titre encore plus préférentiel, ledit sel de terre rare est le tris[bis(2-éthylhexyl)phosphate] de néodyme.
A titre d'agent d'alkylation utilisable dans le système catalytique selon l'invention, on peut citer des alkylaluminiums tels que:

- des triallcylaluminiums, par exemple le triisobutylaluminium, ou
- des hydrures de dialkylaluminium, par exemple l'hydrure de diisobutylaluminium.

On notera que cet agent d'alkylation est de préférence constitué de l'hydrure de diisobutylaluminium (appelé HDiBA dans la suite de la présente description).
A titre de donneur d'halogène utilisable dans le système catalytique selon l'invention, on peut citer des halogénures d'alkylaluminium, de préférence le chlorure de diéthylaluminium (appelé CDEA dans la suite de la présente description).
On notera que le rapport molaire (donneur d'halogène / sel de terre rare) peut présenter une valeur allant de 2,6 à 3.
Selon l'invention, le procédé de préparation dudit système catalytique consiste:

- dans une première étape, à réaliser une suspension dudit sel de terre rare dans ledit solvant,
- dans une seconde étape, à ajouter à la suspension ledit monomère diène conjugué,
- dans une troisième étape, à ajouter ledit agent d'alkylation à la suspension comprenant ledit monomère pour l'obtention d'un sel alkylé, et
- dans une quatrième étape, à ajouter ledit donneur d'halogène au sel alkylé.

Les caractéristiques précitées de la présente invention, ainsi que d'autres, seront mieux comprises à la lecture de la description suivante de plusieurs exemples de réalisation de l'invention.
Pour chacun des exemples ci-après, on a initialement utilisé une coupe C5 de vapocraquage de naphta (coupe non enrichie en isoprène) dont la composition est la suivante :

| Isoprène | 24 % | | |
| Alcanes | 14% | | |
| Mono-oléfines | 36 %, | dont α-oléfines | 17 % |
| | | β-oléfines | 19 % |
| Acétyléniques | 1 % | | |
| Aromatiques | 2 % | | |
| Diènes | 23 %, | dont pentadiène 1,4 | 3 % |
| | | pipérylène | 11 % |
| | | cyclopentadiène | 8 % |
| | | autres diènes | 1 %. |

**EXEMPLE 1 :**

**Synthèse de polyisoprènes à partir d'une première coupe C5 enrichie en isoprène.**

**I. Obtention d'une première coupe C5 enrichie en isoprène selon l'invention:**

On a soumis la coupe C5 initiale à une série d'étapes d'enrichissement en isoprène, pour l'obtention d'une coupe C5 enrichie dans laquelle la fraction massique d'isoprène est seulement de 62 %.

Dans une première étape d'enrichissement, on a procédé à une distillation simple de la coupe C5 initiale sur une colonne à 50 plateaux, pour que la fraction massique de cyclopentadiène dans la coupe soit réduite à 600 ppm.

Dans une seconde étape d'enrichissement, on a procédé à une distillation sur de l'anhydride maléique de la coupe obtenue suite à ladite première étape, en utilisant un rapport molaire (anhydride maléique / cyclopentadiène) sensiblement égal à 30, pour que la fraction massique de cyclopentadiène dans la coupe soit réduite à une valeur inférieure à 5 ppm. De plus, la fraction massique d'alcynes « vrais » résiduels (vinylacétylènes) dans la coupe est réduite à 750 ppm.

Dans une troisième étape d'enrichissement, on a procédé à une distillation de la coupe obtenue suite à ladite seconde étape sur de l'hydrure de diisobutylaluminium (HDiBA), pour que la fraction massique des vinylacétylènes soit réduite à 10 ppm dans la coupe. On a utilisé pour cette distillation un rapport molaire (HDiBA / vinylacétylènes) sensiblement égal à 40.

Dans une quatrième étape d'enrichissement, on a procédé à un passage de la coupe ainsi obtenue sur de l'alumine, pour éliminer pratiquement tous les composés polaires résiduels.

Une analyse par chromatographie en phase gazeuse (CPG, voir annexe 3) a permis de déterminer la composition de la coupe C5 enrichie suite à ces quatre étapes (exprimée en fractions massiques de constituants dans la coupe) :

| pentène-1 | 3 % |
|---|---|
| méthyl-2 butène-1 | 8 % |
| pentane | 21 % |
| **isoprène** | **62 %** |
| autres | 3 % |
| pentène-2 | 3 %. |

On notera que le rapport massique relatif (mono-oléfines / isoprène) est sensiblement égal à 22,6 % dans cet exemple de réalisation.

Quant aux rapports massiques relatifs ($\alpha$-oléfines / isoprène) et ($\beta$-oléfines / isoprène), ils sont sensiblement égaux à 17,7 % et 4,8 %, respectivement.

**II. Préparation d'un système catalytique 1 selon un premier exemple de réalisation de l'invention pour la polymérisation de l'isoprène:**

**1) Synthèse d'un sel de phosphate organique de néodyme en vue de la préparation de ce système catalytique 1:**

a) Synthèse d'une solution aqueuse de néodyme $NdCl_3$, $6H_2O$ :

Dans un bécher de 600 ml de forme, « haute », on pèse 96 g de $Nd_2O_3$ (commercialisé par la société RHODIA), qui a été dosé par complexométrie à 85,3 % en Nd (85,7 % en théorie), soit présentant 0,57 mol de Nd.

On ajoute 80 ml d'eau déminéralisée. Sous une hotte aspirante, avec une agitation magnétique et à température ambiante, on ajoute lentement 150 ml d'HCl concentré à 36 % en poids (d = 1,18), soit 1,75 mol d'HCl (rapport molaire HCl/Nd = 1,75/0,57 = 3,07).

La réaction $Nd_2O_3 + 6\ HCl + 9\ H_2O \rightarrow 2\ NdCl_3$, $6H_2O$ est très exothermique.

Lorsque tout l'acide chlorhydrique a été ajouté, on porte la solution à ébullition sous agitation magnétique, pour éliminer l'excès d'acide chlorhydrique. La solution aqueuse de $NdCl_3$ est limpide et de couleur mauve. Il ne reste pas de produit insoluble ($Nd_2O_3$).

On procède ensuite à l'évaporation de cette solution jusqu'à obtenir un volume d'environ 130 ml dans le bécher. La solution de $NdCl_3$, $6H_2O$ est alors très concentrée (elle cristallise à température ambiante).

Puis on verse dans un bidon de 10 litres contenant 4500 ml d'eau déminéralisée la solution concentrée de $NdCl_3$ sous agitation et à température ambiante (en utilisant un moteur avec agitateur en forme d' ancre).

Le pH de la solution, mesuré à 25° C, est voisin de 4.

Puis on ajoute à la solution 1500 ml d'acétone technique. Il ne reste pas de produit insoluble, et la solution ainsi obtenue est de couleur rose.

b) Synthèse d'un phosphate organique de sodium de formule $[RO]_2P(O)ONa$ (R=2-éthylhexyl):

Dans un bécher de 5 litres contenant 1500 ml d'eau déminéralisée, on dissout 68 g de NaOH en pastilles, soit 1,70 mol. Dans un autre bécher de 3 litres contenant 500 ml d'acétone, on dissout 554 g d'un acide phosphorique organique (l'acide bis(2-éthylhexyl) phosphorique, répertorié dans l'ouvrage « Aldrich » sous la référence 23,782-5), soit 1,72 mol de cet acide. Le rapport molaire NaOH / acide phosphorique organique est de 1,70 / 1,72, soit 0,99.

A température ambiante et en agitant à la main à l'aide d'un agitateur en verre, on verse la solution dudit acide phosphorique organique dans la solution de NaOH. La réaction est la suivante :

$$[RO]_2P(O)OH + NaOH \rightarrow [RO]_2P(O)ONa + H_2O.$$

Elle est légèrement exothermique, et l'on obtient une solution homogène de couleur jaunâtre. Le pH de la solution, mesuré à 25° C, est voisin de 7.

c) Synthèse d'un sel phosphaté de néodyme de formule $[[RO]_2P(O)O]_3Nd$:

- On verse sous vive agitation (moteur avec agitateur en forme d'ancre) et à température ambiante la solution de phosphate organique de Na obtenue au paragraphe b) ci-dessus dans la solution aqueuse de $NdCl_3,6H_2O$ obtenue au paragraphe a) ci-dessus.

Il se forme immédiatement un précipité blanc très fin. On maintient le mélange obtenu sous agitation pendant 30 minutes, après l'addition de tout le phosphate organique de Na (selon un rapport molaire $(RO)_2P(O)ONa/NdCl_3$ = 1,70/0,57 = 2,98). La réaction est la suivante :

$$3\ [RO]_2P(O)ONa + NdCl_3,6H_2O \rightarrow Nd[OP(O)[OR]_2]_3 + 3\ NaCl + 6\ H_2O.$$

- On récupère et on lave le sel phosphaté de néodyme ainsi obtenu dans une centrifugeuse équipée d'une "chaussette".

Le pH des eaux « mères » est compris entre 3 et 4 à 25° C. Ces eaux « mères » sont incolores et limpides.

On scinde en deux échantillons le sel obtenu, puis on lave chaque échantillon avec un mélange acétone/ eau déminéralisée en réalisant trois fois le cycle de lavage décrit ci-dessous, afin d'éliminer tous les chlorures.

Chaque cycle de lavage est réalisé dans un seau de 10 litres en matière plastique contenant initialement 2 litres d'acétone. On procède à l'homogénéisation de chaque échantillon et de l'acétone au moyen d'un homogénéiseur « Ultra-Turrax » pendant environ 1 minute, afin d'obtenir une solution de type lait.

On ajoute ensuite 4 litres d'eau déminéralisée dans le seau, puis on homogénéise le mélange obtenu au moyen du même homogénéiseur pendant 3 minutes.

On procède à la centrifugation du mélange ainsi obtenu puis on récupère le sel phosphaté de néodyme dans la "chaussette".

Sur la dernière eau de lavage, le test analytique qualitatif des chlorures est quasi-négatif (la réaction est:

$$NaCl + AgNO_3\ (milieu\ HNO_3) \rightarrow AgCl \downarrow + NaNO_3).$$

On sèche le sel de néodyme ainsi lavé dans une étuve à 60° C, sous vide et avec courant d'air pendant environ 80 heures.

Le rendement final pour chacun des essais de synthèse réalisés est compris entre 95 % et 98 %, suivant les pertes dues aux lavages. On obtient à chaque fois environ 600 g de sel phosphaté de néodyme à l'état sec.

Les teneurs massiques en néodyme, déterminées à la fois par la technique de titrage complexométrique en retour par l'acide diéthylène diamine tétracétique (EDTA) et par la technique de spectrométrie d'émission atomique couplée à un plasma induit (ICP/AES), sont sensiblement comprises entre 12,5 % et.12,8 % (pour un taux théorique $\tau$ de 13,01 %, avec $\tau$ = [144,24 / 1108,50] x 100, où 144,24 g/mol = masse molaire du néodyme).

Pour chacune de ces deux techniques, les mesures de teneur en néodyme ont été effectuées après minéralisation acide du sel par voie humide, soit sur bain de sable en système ouvert, soit en micro-ondes en système fermé.

La technique de titrage complexométrique par l'EDTA en retour consiste en un titrage en retour avec complexation du néodyme, par un excès d'EDTA (l'acide diéthylène diamine tétracétique), dans lequel on dose l'EDTA en excès à pH=4,6 par du sulfate de zinc.

On a utilisé un indicateur coloré avec détection photométrique du point d'équivalence.

La technique de spectrométrie d'émission atomique couplée à un plasma induit est une technique d'analyse élémentaire basée sur l'observation des raies émises par des atomes parvenus dans un état excité au sein d'un plasma.

Les raies d'émission qui ont été utilisées pour l'analyse du néodyme correspondent à des longueurs d'onde de 406,109 nm et 401,225 nm.

Pour mettre en oeuvre cette technique de spectrométrie, on a réalisé un étalonnage préalable avec des sels « témoin » de néodyme présentant une teneur connue en néodyme.

Le tableau ci-après rend compte des teneurs en Nd obtenues au moyen de ces deux techniques (le nombre d'essais réalisés sur chaque échantillon de sel figure entre parenthèses).

| Echantillons de sels analysés | Taux de Nd en % obtenus par titrage complexométrique | Taux de Nd en % obtenus par ICP/AES | Ecart relatif entre les 2 techniques |
|---|---|---|---|
| sel phosphaté de Nd $[[RO]_2P(O)O]_3Nd$ | 12,8 (9) | 12,8 (3) | 0 % |
| sel phosphaté de Nd $[[RO]_2P(O)O]_3Nd$ | 12,8 (4) | 12,6 (3) | 1,6 % |
| sel phosphaté de Nd $[[RO]_2P(O)O]_3Nd$ | 12,7 (6) | 12,2 (4) | 4 % |
| sel phosphaté de Nd $[[RO]_2P(O)O]_3Nd$ | 12,6 (6) | 12,5 (4) | 0,8 % |
| Acétyl acétonate de Nd « témoin » | 31,7 (6) | 32,4 (4) | 2,2 % |
| Oxalate de Nd « témoin » | 37,7 (3) | 38,0 (3) | 0,8 % |

Les résultats obtenus par les deux techniques sont comparables (écart relatif < 4%).

**2) <u>Synthèse du système catalytique 1:</u>**

a) <u>Composition de ce système catalytique 1:</u>

Le système catalytique 1 comprend un sel phosphaté de néodyme tel que synthétisé selon le paragraphe 1) ci-dessus, qui est en suspension dans un solvant hydrocarboné inerte de bas poids moléculaire (constitué de méthylcyclohexane, « MCH » en abrégé ci-après).

Ce système catalytique 1 est caractérisé par les rapports molaires relatifs suivants, par rapport au sel de néodyme :

Sel de Nd butadiène (Bd ci-après) / HDiBA / CDEA = 1/25/1,8/2,6.

b) <u>Procédé de synthèse de ce système catalytique 1:</u>

- <u>Première étape :</u>

En vue de l'obtention de ce système catalytique 1, on verse 15,6 g du sel de néodyme, à l'état de poudre, dans un réacteur de 1 litre préalablement nettoyé de ses impuretés. On soumet ensuite ce sel à un barbotage à l'azote par le fond du réacteur, pendant 15 min.

- <u>Seconde étape</u> :

On introduit 90 % (fraction massique) du méthylcyclohexane (utilisé à titre de solvant) dans le réacteur contenant le sel de néodyme.

La durée de mise en contact du sel de néodyme avec le méthylcyclohexane est de 30 min., et la température de mise en contact est de 30° C.

- <u>Troisième étape</u> :

On introduit ensuite du butadiène dans le réacteur (selon le rapport molaire sel / butadiène de 1/ 25 mentionné au paragraphe a) ci-dessus), à une température de 30° C, en vue de la « préformation » du système catalytique.

- <u>Quatrième étape</u> :

On introduit ensuite dans le réacteur de l'hydrure de diisobutylaluminium (HDiBA) à titre d'agent d'alkylation du sel de néodyme, selon une concentration d'environ 1 M, ainsi qu'une quantité de méthylcyclohexane correspondant à une fraction massique de 5 % de la totalité de ce solvant. La durée de falkylation est de 15 min. et la température de la réaction d'alkylation est de 30° C.

- <u>Cinquième étape</u> :

On introduit ensuite dans le réacteur du chlorure de diéthylaluminium (CDEA) à titre de donneur d'halogène, selon une concentration d'environ 1 M, ainsi qu'une quantité de méthylcyclohexane correspondant à la fraction massique restante de 5 % de la totalité de ce solvant. La température du milieu réactionnel est portée à 60° C.

- <u>Sixième étape</u> :

On procède ensuite à une « préformation » (ou vieillissement) du mélange ainsi obtenu en maintenant cette température de 60° C pendant une durée de 2 heures.

- <u>Septième étape</u> :

On obtient ainsi environ 700 ml d'une solution de système catalytique 1. On procède à la vidange du réacteur et l'on transfère cette solution dans une bouteille "Steinie" de 750 ml, préalablement lavée, séchée et soumise à un barbotage à l'azote.

On stocke finalement la solution catalytique sous atmosphère d'azote dans un congélateur, à la température de -15° C.

**III. Préparation de polyisoprènes au moyen du système catalytique 1, à partir de la coupe C5 enrichie selon ce premier exemple:**

Le réacteur de polymérisation est une bouteille "Steinie" de 250 ml, qui contient 10 g d'isoprène et dont l'étanchéité est assurée par un ensemble de type "joint-capsule percée", permettant l'ajout du système catalytique 1 à l'aide d'une seringue.

La polymérisation de l'isoprène est réalisée dans le cyclohexane à 50° C sous atmosphère inerte (azote), en soumettant la bouteille à une agitation dans un bac à eau.

On a réalisé plusieurs essais de polymérisation consistant à préparer des polyisoprènes, d'une part, à partir de la coupe C5 enrichie selon le paragraphe I. ci-dessus et, d'autre part, à partir d'isoprène pratiquement pur (polyisoprène « témoin »).

Cet isoprène pratiquement pur a été extrait classiquement en laboratoire d'une coupe C5 de vapocraquage de naphta, en réalisant :

- une distillation de la coupe C5 initiale sur de l'anhydride maléique pour éliminer le cyclopentadiène résiduel, suivie
- d'un passage sur une colonne d'alumine pour éliminer les impuretés polaires, et
- d'un barbotage à l'azote pendant 20 min., juste avant la réaction de polymérisation.

On a déterminé, par la technique de chromatographie en phase gazeuse (CPG, voir annexe 3), la fraction massique de l'isoprène extrait de cette coupe C5, qui est de 99,2 %.

On a utilisé des quantités déterminées de base catalytique en néodyme (environ 300 micromoles pour 100 grammes de monomère, quantités exprimée en µMcm).

On notera que les essais ont été réalisés avec un rapport massique S/M (solvant/monomère) qui est égal à 9, la fraction massique d'isoprène dans le milieu de polymérisation étant égale à 25 %.

On a utilisé l'acétylacétone comme agent de stoppage de la réaction de polymérisation (1 ml d'une solution d'acétylacétone de concentration 1M dans le cyclohexane), et la N-1,3-diméthylbutyl-N'-phényl-p-phénylènediamine (6PPD en abrégé) comme agent de protection (selon un volume de 1 ml à une concentration de 20 g/l dans le cyclohexane, soit une masse de 0,02 g).

On a ensuite extrait le polyisoprène de chaque solution polymérique obtenue par stripping à la vapeur d'eau pendant 30 min., en présence de tamolate de calcium (on utilise 2 ml de tamol et 50 ml de CaCl$_2$ à 30 g/l). Puis on a séché pendant environ 18 heures chaque solution extraite dans une étuve à 60° C sous vide (à une pression de 200 mm Hg), avec un léger courant d'azote.

La mesure du taux de conversion de l'isoprène en polyisoprène en fonction du temps de réaction décrit la cinétique de polymérisation pour chaque essai.

La viscosité inhérente à 0,1 g/dl dans le toluène, mesurée à 25°C, caractérise la macrostructure de chaque polyisoprène obtenu.

Le tableau 1 ci-après détaille les résultats obtenus pour chaque essai de polymérisation.

TABLEAU I :

| Essai | Conditions de polymérisation (à 50° C avec le système catalytique 1) | | | | | Polyisoprène |
|---|---|---|---|---|---|---|
| | Isoprène utilisé | Rapport S/M | Quantité Nd (µMcm) | Temps réaction (min.) | Taux conversion (%) | Viscosité Inhérente (dl/g) |
| A | Coupe C5 enrichie | 9 | 300 | 20 | 59 | - |
| | | | | 40 | 81 | - |
| | | | | 60 | 91 | 4,67 |
| B | témoin | 9 | 290 | 20 | 60 | - |
| | | | | 40 | 80 | - |
| | | | | 60 | 93 | 4,84 |

Ces résultats montrent que le système catalytique 1 selon l'invention permet la polymérisation sélective de l'isoprène à partir d'une coupe C5 de vapocraquage de naphta enrichie à 62 % d'isoprène seulement, avec une vitesse de réaction analogue à celle relative à la polymérisation d'isoprène pratiquement pur (« témoin »).

De plus, les polyisoprènes qui sont préparés à une température de 50° C à partir de ladite coupe C5 enrichie à 62 %, tout comme les polyisoprènes « témoin », présentent tous un même taux d'enchaînements cis-1,4, mesuré par la technique de RMN[13]C et par la technique MIR (voir annexe 1), qui est égal à 98,0 %.

On notera que les polyisoprènes obtenus présentent des indices de polymolécularité particulièrement réduits, qui varient de 2,1 à 2,3 (voir l'annexe 2 jointe pour la méthode de mesure SEC).

**EXEMPLE 2 :**

**Synthèse de polyisoprènes à partir d'une seconde coupe C5 enrichie en isoprène.**

**I. Obtention d'une seconde coupe C5 enrichie en isoprène selon l'invention:**

On a soumis la coupe C5 initiale à une série d'étapes d'enrichissement en isoprène, pour l'obtention d'une coupe C5 enrichie dans laquelle la fraction massique d'isoprène est de 56%.

On a procédé de la manière décrite au paragraphe I. de l'exemple 1, à ceci près que :

- la première étape de distillation sur la colonne de 50 plateaux est de type « extractive », étant mise en oeuvre au moyen d'un solvant polaire d'extraction (constitué de diméthylformamide à une concentration de 3 %) ;
- la fraction massique de cyclopentadiène suite à cette première étape est de 150 ppm ;
- la fraction massique de vinylacétylènes suite à la seconde étape de distillation sur de l'anhydride maléique est de 950 ppm.

Une analyse par chromatographie en phase gazeuse (voir annexe 3) a permis de déterminer la composition de la coupe C5 enrichie suite à ces quatre étapes (exprimée en fractions massiques de constituants dans la coupe) :

| | |
|---|---|
| pentène-1 | 5 % |
| méthyl-2 butène-1 | 11 % |
| pentane | 20 % |
| isoprène | 56 % |
| autres | 3 % |
| pentène-2 | 5 %. |

On notera que le rapport massique relatif (mono-oléfines / isoprène) est sensiblement égal à 37,5 % dans cet exemple de réalisation.

Quant aux rapports massiques relatifs ($\alpha$-oléfines / isoprène) et ($\beta$-oléfines / isoprène), ils sont sensiblement égaux à 28,6 % et 8,9 %, respectivement.

## II. Préparation d'un système catalytique 2 selon un second exemple de réalisation de l'invention pour la polymérisation de l'isoprène:

Le système catalytique 2 comprend un sel phosphaté de néodyme tel que synthétisé à l'exemple 1, et il se différencie du système catalytique 1 de l'exemple 1 par :

- les rapports molaires relatifs sel de Nd / butadiène (Bd ci-après) / HDiBA / CDEA, respectivement de 1/30 / 1,8 / 2,6,
- la durée de l'étape d'alkylation qui est de 30 min., et
- la durée de l'étape de « préformation » avec le CDEA qui est d'une heure.

## III. Préparation de polyisoprènes au moyen du système catalytique 2, à partir de la coupe C5 enrichie selon ce second exemple de réalisation:

On a réalisé comme à l'exemple 1 des essais de polymérisation, d'une part, à partir de cette coupe C5 enrichie selon ce second exemple et, d'autre part, à partir d'isoprène pur à 99,2 % (essais « témoin »).

Les conditions de polymérisation et de récupération des polyisoprènes sont les mêmes que celles décrites à l'exemple 1.

Le tableau II ci-après détaille les résultats obtenus.

TABLEAU II :

| Essai | Conditions de polymérisation (à 50° C avec le système catalytique 2) | | | | | Polyisoprène |
|---|---|---|---|---|---|---|
| | Isoprène utilisé | Rapport S/M | Quantité Nd ($\mu$Mcm) | Temps réaction (min.) | Taux conversion (%) | Viscosité Inhérente (dl/g) |
| E | Coupe C5 enrichie | 9 | 350 | 20 | 46 | - |
| | | | | 40 | 73 | - |
| | | | | 60 | 84 | - |
| | | | | 120 | 100 | 4,55 |
| F | témoin | 9 | 320 | 20 | 59 | - |
| | | | | 40 | 86 | - |
| | | | | 60 | 99 | 4,25 |
| | | | | 120 | 100 | 4,21 |

TABLEAU II :   (suite)

| Essai | Conditions de polymérisation (à 50° C avec le système catalytique 2) | | | | | Polyisoprène |
| | Isoprène utilisé | Rapport S/M | Quantité Nd (µMcm) | Temps réaction (min.) | Taux conversion (%) | Viscosité Inhérente (dl/g) |
|---|---|---|---|---|---|---|
| G | Coupe C5 enrichie | 9 | 390 | 20 | 59 | - |
| | | | | 40 | 86 | - |
| | | | | 60 | 96 | 3,97 |
| | | | | 120 | 100 | 3,97 |
| H | témoin | 9 | 360 | 20 | 62 | - |
| | | | | 40 | 90 | - |
| | | | | 60 | 100 | 3,93 |
| | | | | 120 | 100 | 3,83 |

Ces résultats montrent que le système catalytique 2 selon l'invention permet la polymérisation sélective de l'isoprène à partir d'une coupe C5 de vapocraquage de naphta enrichie à 56 % d'isoprène seulement, avec une vitesse de réaction analogue à celle relative à la polymérisation d'isoprène pratiquement pur (« témoin »).

Comme mentionné à l'exemple 1, les polyisoprènes qui sont préparés à une température de 50° C à partir de la coupe C5 enrichie à 56 % d'isoprène, tout comme les polyisoprènes « témoin », présentent tous un même taux d'enchaînements cis-1,4, mesuré par la technique de RMN[13]C et par la technique MIR (voir annexe 1), qui est égal à 98,0 %.

On notera que les polyisoprènes obtenus présentent des indices de polymolécularité particulièrement réduits, qui varient de 2,1 à 2,3 (voir l'annexe 2 jointe pour la méthode de mesure SEC).

## EXEMPLE 3 :

**Synthèse de polyisoprènes à partir de troisièmes coupes C5 enrichies en isoprène.**

### I. Obtention de deux troisièmes coupes C5 enrichies en isoprène selon l'invention:

On a soumis la coupe C5 initiale à une série d'étapes d'enrichissement en isoprène, pour l'obtention de chacune des deux coupes C5 enrichies dans lesquelles la fraction massique d'isoprène est de 57 %.

On a procédé de la manière décrite au paragraphe I. de l'exemple 2, à ceci près que ladite première étape de distillation « extractive » sur la colonne de 50 plateaux (mise en oeuvre au moyen d'un solvant polaire d'extraction constitué de diméthylformamide à une concentration de 3 %) est suivie par la séquence de trois étapes suivantes :

- deux hydrogénations catalytiques successives qui sont telles que la fraction massique des vinylacétylènes (alcynes « vrais ») est réduite à 10 ppm dans chacune des deux coupes (la fraction massique de vinylacétylènes avant ces hydrogénations catalytiques étant de 950 ppm, tout comme dans l'exemple 2 avant l'étape de distillation sur HDi-BA), puis
- une distillation sur de l'anhydride maléique pour que la fraction massique de cyclopentadiène dans la coupe soit réduite à une valeur inférieure à 5 ppm (distillation mise en oeuvre de la même manière qu'aux exemples 1 et 2), puis
- un passage de la coupe ainsi obtenue sur de l'alumine ou sur un tamis moléculaire de type « 3A », respectivement pour l'obtention des deux coupes C5 selon ce troisième exemple de l'invention, afin d'éliminer pratiquement tous les composés polaires résiduels.

Les deux hydrogénations catalytiques précitées sont réalisées en utilisant un seul et même catalyseur de Lindlar (comprenant du palladium selon une fraction massique de 5 %, sur du carbonate de calcium « empoisonné » au plomb).

Les conditions opératoires pour ces hydrogénations sont les suivantes :

- réacteur : bouteille « Steinie » de 250 ml, avec agitation dans un bac à eau (l'étanchéité de la bouteille étant assurée par un ensemble de type « joint-capsule percée » permettant l'introduction d'hydrogène à l'aide d'une aiguille) ;
- volume traité : 100 ml, soit 68 g ;
- catalyseur de Lindlar : 70 mg ;
- pression d'hydrogène dans le réacteur : 3 bars pour chaque hydrogénation ;
- temps de réaction : 6 heures pour chaque hydrogénation ;
- température de réaction : 60° C.

Chaque coupe C5 ainsi hydrogénée est ensuite filtrée, au moyen d'un filtre de qualité « HPLC ».

Suite à ces deux hydrogénations, on notera que la fraction massique de vinylacétylènes (10 ppm) présents dans chaque coupe C5 est sensiblement la même que celle obtenue aux exemples 1 et 2, après distillation sur HDiBA.

Une analyse par chromatographie en phase gazeuse (voir annexe 3) a permis de déterminer la composition de chaque coupe C5 enrichie selon ce troisième exemple de réalisation de l'invention suite aux quatre étapes précitées (exprimée en fractions massiques de constituants dans chaque coupe) :

| | |
|---|---|
| pentène-1 | 5 % |
| méthyl-2 butène-1 | 12 % |
| pentane | 21 % |
| **isoprène** | **57 %** |
| autres | 2 % |
| pentène-2 | 3 %. |

On notera que le rapport massique relatif (mono-oléfines / isoprène) est sensiblement égal à 35,1 % dans ce troisième exemple de réalisation.

Quant aux rapports massiques relatifs ($\alpha$-oléfines / isoprène) et $\beta$-oléfines / isoprène), ils sont sensiblement égaux à 29,8 % et 5,3 %, respectivement.

**II. Préparation d'un système catalytique 3 selon un troisième exemple de réalisation de l'invention pour la polymérisation de l'isoprène:**

Le système catalytique 3 comprend un sel phosphaté de néodyme tel que synthétisé à l'exemple 1, et il se différencie du système catalytique 1 de l'exemple 1 par :

- les rapports molaires relatifs sel de Nd / butadiène (Bd ci-après) / HDiBA / CDEA, respectivement de 1 / 30 / 1,8 / 2,6, et
- la durée de l'étape d'alkylation qui est de 30 min.

**III. Préparation de polyisoprènes au moyen du système catalytique 3, à partir des deux coupes C5 enrichies selon ce troisième exemple de réalisation:**

On a réalisé comme à l'exemple 1 des essais de polymérisation, d'une part, à partir des deux coupes C5 enrichies selon ce troisième exemple et, d'autre part, à partir d'isoprène pur à 99,2 % (essai « témoin »).

Les seules différences avec les essais de l'exemple 1 sont les suivantes :

- la fraction massique d'isoprène dans le milieu de polymérisation est de 10 %, les essais ayant été réalisés avec un rapport massique S/M (solvant/ monomère) qui est égal à 9;
- on a utilisé une quantité de base catalytique en néodyme qui est de 440 micromoles pour 100 grammes de monomère pour chacun des deux essais selon ce troisième exemple selon l'invention, et qui est de 400 micromoles pour 100 grammes de monomère pour ledit essai « témoin » (quantités exprimée en µMcm).

Les conditions de polymérisation et de récupération des polyisoprènes sont les mêmes que celles décrites à l'exemple 1.

Le tableau III ci-après détaille les résultats obtenus.

TABLEAU III :

| Essai. | Conditions de polymérisation (à 50° C avec le système catalytique 3) | | | | | Polyisoprène |
| --- | --- | --- | --- | --- | --- | --- |
| | Isoprène utilisé | Rapport S/M | Quantité Nd (µMcm) | Temps réaction (min.) | Taux conversion (%) | Viscosité Inhérente (dl/g) |
| I | Coupe C5 enrichie (passée sur alumine) | 9 | 440 | 20 | 64 | - |
| | | | | 40 | 89 | - |
| | | | | 60 | 97 | 4,19 |
| J | Coupe C5 enrichie (passée sur tamis 3A) | 9 | 440 | 20 | 62 | - |
| | | | | 40 | 90 | - |
| | | | | 60 | 98 | 3,94 |
| K | témoin | 9 | 400 | 20 | 71 | - |
| | | | | 40 | 95 | - |
| | | | | 60 | 100 | 4,23 |

Ces résultats montrent que le système catalytique 3 selon l'invention permet la polymérisation sélective de l'isoprène à partir de coupes C5 de vapocraquage de naphta ayant été chacune enrichies à 57 % d'isoprène en mettant en oeuvre une réaction d'hydrogénation catalytique pour réduire le taux de vinylacétylènes, avec une vitesse de réaction analogue à celle relative à la polymérisation d'isoprène pratiquement pur (« témoin »).

Comme mentionné aux exemples 1 et 2, les polyisoprènes qui sont préparés à une température de 50° C à partir de chaque coupe C5 enrichie selon ce troisième exemple, tout comme le polyisoprène « témoin », présentent tous un même taux d'enchaînements cis-1,4, mesuré par la technique de RMN[13]C et par la technique MIR (voir annexe 1), qui est égal à 98,0 %.

On notera que les polyisoprènes obtenus présentent des indices de polymolécularité particulièrement réduits, qui varient de 2,1 à 2,3 (voir l'annexe 2 jointe pour la méthode de mesure SEC).

## ANNEXE 1 :

## Détermination de la microstructure des polyisoprènes.

### 1) Par la technique de résonance magnétique nucléaire du carbone 13 (analyse RMN[13]C) :

a) Préparation des échantillons:

2 g de polyisoprène sont extraits à l'acétone au reflux pendant 8 heures. Le polyisoprène extrait est ensuite séché à température ambiante et sous vide pendant 24 heures. Puis ce polyisoprène séché est remis en solution dans du chloroforme. La solution de polyisoprène est filtrée et le solvant est éliminé à l'évaporateur rotatif pendant 4 heures (la température du bain est de 40° C).

Pour l'analyse, on solubilise environ 600 mg du polyisoprène ainsi préparé dans du $CDCl_3$ (2 ml), directement dans un tube RMN[13]C.

b) Caractéristiques de l'appareillage:

- Spectrophotomètre commercialisé sous la dénomination « BRUKER AM250 ».
- Fréquence de résonance (SFO) = 62,9 MHz.
- Programme d'impulsion : INVGATE.AU (suppression de l'effet « NOE » pour l'analyse quantitative en RMN du $^{13}$C).
- Durée d'impulsion : 9µs (90°).
- Durée de relaxation : 10 s.

- Nombre de transitoires accumulés (NS) = 8192.

c) Attribution des pics du spectre:

L'identification des pics a été faite d'après :

Quang Tho Pham, R. Petiaud, H. Waton, M.F. Llauro Darricades, *"Proton and NMR Spectra of Polymers"*, **1991**, Penton Press.

d) Méthode d'intégration:

- Pas de motifs 1-2 détectés.
- Le rapport entre les taux de 3-4 et de 1-4 est déterminé à l'aide des carbones éthyléniques. La teneur en enchaînements 1-4 trans et 1-4 cis dans le polyisoprène est calculée avec les carbones aliphatiques.

**2) Par la technique de dosage par moyen infrarouge (MIR):**

a) Préparation des échantillons:

Pour ce dosage infrarouge, on utilise le polyisoprène tel que préparé au paragraphe 1) ci-dessus, pour la RMN (l'échantillon est extrait à l'acétone puis est séché en étuve).
Une solution du polyisoprène à 10 g/l exactement dans le $CCl_4$ est analysée à l'aide d'une cellule de KBr de 0,2 mm d'épaisseur.

b) Appareillage:

- Spectrophotomètre commercialisé sous la dénomination « BRUKER IFS88 ».
- Conditions d'enregistrement:

    ouverture du faisceau : maximale ;
    résolution : 2 $cm^{-1}$ ;
    vitesse du miroir mobile : 0,639 $cm.s^{-1}$;
    détecteur : DTGS ;
    accumulations : 64 scan ;
    temps de purge : 3 mn ;
    fenêtre spectrale : 4000 à 400 $cm^{-1}$;
    spectres enregistrés en transmittance ;
    référence : solvant $CCl_4$.

- Traitement des spectres :

    transfert sur micro-ordinateur ;
    traitement avec le logiciel « OPUS » de « BRUKER ».

c) Attribution des pics du spectre:

Des études spectrales et le contenu des documents suivants ont permis de déterminer les bandes caractéristiques des différents modes d'enchaînement :

- Y. Tanaka, Y. Takeuchi, M. Kobayashi, H. Tadokoro, *Journal of Polymer Science, Part A-2,* **1971**, 9(1), 43-57.

    - J.P. Kistel, G. Friedman, B. Kaempf, *Bulletin de la Société Chimique de France,* **1967**, n°12.
    - F. Assioma, J. Marchal, G *R. Acad. Sc. Paris, Ser C,* **1968**, 266(22), 1563-6 et *Ser D,* **1968**, 266(6), 369-72.
    - T.F. Banigan, A.J. Verbiscar, T.A. Oda, *Rubber Chemistry and technology,* **1982**, 55(2), 407-15.

La conformation 3-4 présente deux bandes caractéristiques :

- une bande à 880 cm$^{-1}$ de forte intensité correspondant aux vibrations de déformation hors du plan ($\delta$ C-H) des hydrogènes terminaux du groupement vinylique (=CH$_2$).
- une bande à 3070 cm$^{-1}$ correspondant aux élongations $\nu$ C-H de ce même groupement (=CH$_2$).

La conformation 1-4 cis possède une bande caractéristique vers 3030 cm$^{-1}$. Cette bande correspond aux vibrations d'élongation $\nu$ C-H du groupement =CH.

La bande correspondant aux vibrations de déformation symétrique des groupements méthyles ($\delta$ CH$_3$) est une bande complexe qui intègre les trois conformations. L'absorption correspondant aux $\delta$ CH$_3$ de la conformation 1-4 trans est maximale vers 1385 cm$^{-1}$; il s'agit d'un épaulement de cette bande.

d) Méthode d'intégration:

Les bandes du 3-4 et du 1-4 cis sont intégrées selon le mode de la surface tangentielle.

Le maximum d'absorption du 1-4 trans se situe en épaulement de la bande intense des $\delta$ CH$_3$. La méthode la plus adaptée dans ce cas est la mesure de la hauteur de bande avec comme ligne de base la tangente de la bande des $\delta$ CH$_3$.

e) Courbes d'étalonnage:

Expression de la loi de Beer-Lambert:

$$Do(\nu \text{ ou } \delta) = \varepsilon(\nu \text{ ou } \delta) \text{ e c}$$

avec:

Do($\nu$ ou $\delta$) = densité optique de la bande $\nu$ ou $\delta$ ;
$\varepsilon$($\nu$ ou $\delta$) = coefficient d'extinction molaire de l'analyte responsable de la bande $\nu$ ou $\delta$ ;
c = concentration molaire de l'analyte ; et
e = épaisseur de l'échantillon.

Des polyisoprènes commerciaux (commercialisés sous les dénominations « IR305 », « NATSYN 2200 » et « SKI-3S »), un polyisoprène synthétisé au laboratoire (MC78) et du caoutchouc naturel (NR) sont pris comme étalons. Comparés à iso-concentration (solutions), la loi peut donc s'écrire :

$$Dx=KX$$

avec :

Dx = valeur de l'intégration de la bande correspondant au motif X,
X = taux de motif X dans la gomme (déterminé par RMN[13]C), et
K = constante d'étalonnage.

Les courbes d'étalonnage Dx = f(X) peuvent donc être tracées pour chacun des motifs.

**ANNEXE 2 :**

**Détermination de la distribution des masses moléculaires des élastomères obtenus par la technique de chromatographie d'exclusion par la taille (SEC).**

a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires.d'un polymère. A partir de produits étalons commerciaux, les différentes masses moyennes en nombre (Mn) et en poids (Mw) peuvent être déterminées et l'indice de polydispersité calculé (Ip = Mw/Mn).

b) Préparation du polymère:

Il n'y a pas de traitement particulier de l'échantillon de polymère avant analyse. Celui-ci est simplement solubilisé dans du tétrahydrofurane à une concentration d'environ 1 g/l.

c) Analyse SEC:

L'appareillage utilisé est un chromatographe « WATERS; modèle 150C ». Le solvant d'élution est le tétrahydrofurane, le débit de 0,7 ml/mn, la température du système de 35°C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».

Le volume injecté de la solution de l'échantillon de polymère est 100 µl. Le détecteur est un réfractomètre différentiel « WATERS modèle RI32X » et le logiciel d'exploitation des données chromatographiques est le système « WATERS MILLENIUM » (version 3.00).

**ANNEXE 3 :**

**Détermination de la composition des coupes C5 de vapocraquage de naphta « témoin » et enrichies selon l'invention, par chromatographie en phase gazeuse (CPG).**

a) Analyse CPG / FID :

L'analyse de chaque coupe C5 enrichie selon l'invention et de la coupe C5 « témoin » (avec une fraction massique d'isoprène proche de 100 %) est effectuée à partir de traces injectées sans dilution préalable, afin de ne pas saturer la réponse du détecteur à ionisation de flamme (FID) qui est utilisé.

b) Conditions chromatographiques utilisées:

Chromatographe HP6890
Gaz vecteur : azote
Pression en tête de colonne : 6,6 psi
Débit constant : 0,8 ml/min.
Mode d'injection : « split »
Rapport de « split » : 50/1
Température de l'injecteur : 250°C
Volume injecté : traces
Colonne HP 1 : phase méthyl silicone
  longueur : 60 m
  diamètre intérieur : 0,32 mm
  épaisseur du film : 1,0µm
Programmation de température : T1=30° C
  D1=17 min.
  P1=20° C/min.
  T2=280° C
  D2=20 min.
Température du détecteur FID : 300° C.

c) Résultats ;

On a réalisé une analyse semi-quantitative en calculant la proportion relative des aires des pics de chaque chromatogramme, pour obtenir une répartition. On n'a pas pris en compte les différences de réponses des composés élués, le détecteur FID ne détectant pas de signaux dus à la présence des composés non élués et élués.
La proportion en % d'un composé i est donnée par l'expression suivante :

$$\%i = A_i / \sum A_i \times 100$$

avec

A_i = aire relative au composé i, et
$\sum A_i$ = somme de tous les composés i élués (identifiés et non identifiés).

**Revendications**

1.  Procédé d'obtention d'un polyisoprène à partir d'une coupe C5 de vapocraquage de naphta enrichie en isoprène, ledit procédé consistant essentiellement à faire réagir un système catalytique en présence de ladite coupe C5 enrichie,
    **caractérisé en ce qu'**il consiste à utiliser :

    *   une coupe C5 enrichie en isoprène de telle sorte que la fraction massique d'isoprène dans ladite coupe enrichie appartienne à un domaine allant de 30 % à 95 %, et
    *   un système catalytique à base d'au moins :

        -   un monomère diène conjugué,
        -   un sel d'un ou plusieurs métaux de terre rare d'un acide phosphorique organique,
        -   un agent d'alkylation constitué d'un alkylaluminium répondant à la formule $AlR_3$ ou $HAlR_2$, et
        -   un donneur d'halogène constitué d'un halogénure d'alkylaluminium,

        ledit sel étant en suspension dans au moins un solvant hydrocarboné inerte, saturé et de type aliphatique ou alicyclique qui est compris dans ledit système catalytique, et le rapport molaire (agent d'alkylation / sel de terre rare) appartenant à un domaine allant de 1 à 5.

2.  Procédé d'obtention d'un polyisoprène selon la revendication 1, **caractérisé en ce qu'**il consiste à utiliser un rapport molaire (agent d'alkylation / sel de terre rare) appartenant à un domaine allant de 1 à 2.

3.  Procédé d'obtention d'un polyisoprène selon la revendication 1 ou 2, **caractérisé en ce qu'**il consiste à utiliser, à titre de système catalytique, un système qui est tel que ledit sel de terre rare est un tris[bis(2-éthylhexyl)phosphate] de terre(s) rare(s).

4.  Procédé d'obtention d'un polyisoprène selon la revendication 3, **caractérisé en ce qu'**il consiste à utiliser, à titre de système catalytique, un système qui est tel que ledit sel de terre rare est le tris[bis(2-éthylhexyl)phosphate] de néodyme.

5.  Procédé d'obtention d'un polyisoprène selon une des revendications précédentes, **caractérisé en ce qu'**il consiste à utiliser, à titre de système catalytique, un système comprenant ledit ou lesdits métaux de terre rare selon une concentration égale ou sensiblement égale à 0,02 mol/l.

6.  Procédé d'obtention d'un polyisoprène selon une des revendications précédentes, **caractérisé en ce qu'**il consiste à utiliser, à titre de système catalytique, un système qui est tel que le rapport molaire (donneur d'halogène/ sel) appartient à un domaine allant de 2,6 à 3.

7.  Procédé d'obtention d'un polyisoprène selon une des revendications précédentes, **caractérisé en ce qu'**il consiste à utiliser, à titre de système catalytique, un système qui est tel que le rapport molaire (monomère diène conjugué / sel) appartient à un domaine allant de 25 à 50.

8.  Procédé d'obtention d'un polyisoprène selon une des revendications précédentes, **caractérisé en ce qu'**il consiste à utiliser, à titre de système catalytique, un système qui est tel que ledit monomère diène conjugué est le butadiène.

**9.** Procédé d'obtention d'un polyisoprène selon une des revendications précédentes, **caractérisé en ce qu'**il consiste à utiliser, à titre de système catalytique, un système qui est tel que ledit agent d'alkylation est l'hydrure de diisobutylaluminium.

**10.** Procédé d'obtention d'un polyisoprène selon une des revendications précédentes, **caractérisé en ce qu'**il consiste à utiliser, à titre de système catalytique, un système qui est tel que ledit donneur d'halogène est le chlorure de diéthylaluminium.

**11.** Procédé d'obtention d'un polyisoprène selon une des revendications précédentes, **caractérisé en ce qu'**il consiste à utiliser une coupe C5 enrichie en isoprène dans laquelle la fraction massique d'isoprène appartient à un domaine allant de 30 % à 70 %.

**12.** Procédé d'obtention d'un polyisoprène selon une des revendications précédentes, ladite coupe C5 enrichie comprenant des niono-oléfines aliphatiques et alicycliques, **caractérisé en ce qu'**il consiste à utiliser une coupe C5 enrichie en isoprène dans laquelle le rapport massique (mono-oléfines aliphatiques et alicycliques / isoprène) est inférieur ou égal à 50%.

**13.** Procédé d'obtention d'un polyisoprène selon la revendication 12, **caractérisé en ce qu'**il consiste à utiliser une coupe C5 enrichie en isoprène dans laquelle le rapport massique (mono-oléfines aliphatiques et alicycliques / isoprène) est compris entre 20 % et 50 %.

**14.** Procédé d'obtention d'un polyisoprène selon la revendication 12, lesdites mono-oléfines comprenant des $\alpha$-oléfines et des $\beta$-oléfines, **caractérisé en ce qu'**il consiste à utiliser une coupe C5 enrichie en isoprène dans laquelle le rapport massique ($\alpha$-oléfines / isoprène) est inférieur ou égal à 30 %, et dans laquelle le rapport massique ($\beta$-oléfines / isoprène) est inférieur ou égal à 20 %.

**15.** Procédé d'obtention d'un polyisoprène selon une des revendications précédentes, **caractérisé en ce qu'**il consiste à utiliser une coupe C5 enrichie en isoprène dans laquelle le rapport massique (1,3 pentadiène / isoprène) est inférieur ou égal à 0,5 %.

**16.** Procédé d'obtention d'un polyisoprène selon une des revendications précédentes, **caractérisé en ce qu'**il consiste à utiliser une coupe C5 enrichie en isoprène dans laquelle le rapport massique (alcynes disubstitués / isoprène) est inférieur ou égal à 0,7 %.

**17.** Procédé d'obtention d'un polyisoprène selon une des revendications précédentes, **caractérisé en ce qu'**il consiste à utiliser une coupe C5 enrichie en isoprène dans laquelle le rapport massique (composés vinylacétyléniques / isoprène) est inférieur ou égal à 15 ppm (parties par million).

**18.** Procédé d'obtention d'un polyisoprène selon une des revendications précédentes, **caractérisé en ce qu'**il consiste à utiliser une coupe C5 enrichie en isoprène dans laquelle le rapport massique (1,4 pentadiène / isoprène) est inférieur ou égal à 0,2 %.

**19.** Procédé d'obtention d'un polyisoprène selon une des revendications précédentes, **caractérisé en ce qu'**il consiste à utiliser une coupe C5 enrichie en isoprène dans laquelle le rapport massique (cyclopentadiène / isoprène) est inférieur ou égal à 5 ppm.

**20.** Procédé d'obtention d'un polyisoprène selon une des revendications précédentes, ladite coupe C5 comprenant du limonène, **caractérisé en ce qu'**il consiste à utiliser une coupe C5 enrichie en isoprène dans laquelle le rapport massique (limonène / isoprène) est inférieur ou égal à 2 %.

**21.** Procédé d'obtention d'un polyisoprène selon une des revendications précédentes, **caractérisé en ce qu'**il consiste à utiliser ledit système catalytique pour que ledit polyisoprène présente un taux d'enchaînements cis-1,4, mesuré selon les techniques de résonance magnétique nucléaire du carbone 13 et de dosage par moyen infrarouge, qui appartienne à un domaine allant de 98,0 % à 99,6 %.

**Patentansprüche**

1. Verfahren zur Herstellung eines Polyisoprens ausgehend von einem C5-Schnitt aus dem Dampfcracken von Naphtha, der mit Isopren angereichert ist, wobei das Verfahren im Wesentlichen darin besteht, ein katalytisches System in Gegenwart des angereicherten C5-Schnittes reagieren zu lassen,
**dadurch gekennzeichnet, dass** verwendet werden:

   *   ein mit Isopren angereicherter C5-Schnitt, der so angereichert wurde, dass der Masseanteil des Isoprens in dem angereicherten Schnitt im Bereich von 30 bis 95 % liegt, und
   *   ein katalytisches System auf der Basis von zumindest den folgenden Verbindungen:

       -   ein konjugiertes Dienmonomer,
       -   ein Salz eines oder mehrerer Seltenerdmetalle einer organischen Phosphorsäure,
       -   ein Alkylierungsmittel, das aus einem Alkylaluminium der Formel $AlR_3$ oder $HAlR_2$ besteht und
       -   ein Halogendonor, der aus einem Alkylaluminiumhalogenid besteht,

   wobei das Salz in mindestens einem inerten, gesättigten Kohlenwasserstoff vom aliphatischen oder alicyclischen Typ suspendiert ist, der in dem katalytischen System enthalten ist, wobei das Molverhältnis (Alkylierungsmittel/ Seltenerdmetallsalz) im Bereich von 1 bis 5 liegt.

2. Verfahren zur Herstellung eines Polyisoprens nach Anspruch 1, **dadurch gekennzeichnet, dass** es darin besteht, ein Molverhältnis (Alkylierungsmittel/ Seltenerdmetallsalz) im Bereich von 1 bis 2 zu verwenden.

3. Verfahren zur Herstellung eines Polyisoprens nach Anspruch 1 oder 2, **dadurch gekennzeichnet, dass** es darin besteht, als katalytisches System ein System zu verwenden, das so vorliegt, dass das Seltenerdmetallsalz ein Tris[bis(2-ethylhexyl)-phosphat] eines oder mehrerer Seltenerdmetalle ist.

4. Verfahren zur Herstellung eins Polyisoprens nach Anspruch 3, **dadurch gekennzeichnet, dass** es darin besteht, als katalytisches System ein System zu verwenden, bei dem das Seltenerdmetallsalz das Tris[bis(ethylhexyl)-phosphat] von Neodym ist.

5. Verfahren zur Herstellung eines Polyisoprens nach einem der vorhergehenden Ansprüche, **dadurch gekennzeichnet, dass** es darin besteht, als katalytisches System ein System zu verwenden, das das oder die Seltenerdmetall(e) in einer Konzentration von 0,02 mol/l oder etwa 0,02 mol/l enthält.

6. Verfahren zur Herstellung eines Polyisoprens nach einem der vorhergehenden Ansprüche, **dadurch gekennzeichnet, dass** es darin besteht, als katalytisches System ein System zu verwenden, das so vorliegt, dass das Molverhältnis (Halogendonor/ Salz) im Bereich von 2,6 bis 3 liegt.

7. Verfahren zur Herstellung eines Polyisoprens nach einem der vorhergehenden Ansprüche, **dadurch gekennzeichnet, dass** es darin besteht, als katalytisches System ein System zu verwenden, bei dem das Molverhältnis (konjugiertes Dienmonomer/Salz) im Bereich von 25 bis 50 liegt.

8. Verfahren zur Herstellung eines Polyisoprens nach einem der vorhergehenden Ansprüche, **dadurch gekennzeichnet, dass** es darin besteht, als katalytisches System ein System zu verwenden, bei dem das konjugierte Dienmonomer das Butadien ist.

9. Verfahren zur Herstellung eines Polyisoprens nach einem der vorhergehenden Ansprüche, **dadurch gekennzeichnet, dass** es darin besteht, als katalytisches System ein System zu verwenden, das als Alkylierungsmittel das Diisobutylaluminiumhydrid enthält.

10. Verfahren zur Herstellung eines Polyisoprens nach einem der vorhergehenden Ansprüche, **dadurch gekennzeichnet, dass** es darin besteht, als katalytisches System ein System zu verwenden, bei dem der Halogendonor das Diethylaluminiumchlorid ist.

11. Verfahren zur Herstellung eines Polyisoprens nach einem der vorhergehenden Ansprüche, **dadurch gekennzeichnet, dass** es darin besteht, einen mit Isopren angereicherten C5-Schnitt zu verwenden, bei dem der Masseanteil des Isoprens im Bereich von 30 bis 70 % liegt.

**12.** Verfahren zur Herstellung eines Polyisoprens nach einem der vorhergehenden Ansprüche, wobei der angereicherte C5-Schnitt aliphatische und alicyclische Monoolefine enthält, **dadurch gekennzeichnet, dass** es darin besteht, einen mit Isopren angereicherten C5-Schnitt zu verwenden, bei dem das Masseverhältnis (aliphatische und alicyclische Monoolefine/Isopren) höchsten 50 % beträgt.

**13.** Verfahren zur Herstellung eines Polyisoprens nach Anspruch 12, **dadurch gekennzeichnet, dass** es darin besteht, einen mit Isopren angereicherten C5-Schnitt zu verwenden, bei dem das Masseverhältnis (aliphatische und alicyclische Monoolefine/Isopren) im Bereich von 20 bis 50 % liegt.

**14.** Verfahren zur Herstellung eines Polyisoprens nach Anspruch 12, wobei die Monoolefine α-Olefine und β-Olefine umfassen, **dadurch gekennzeichnet, dass** es darin besteht, einen mit Isopren angereicherten C5-Schnitt zu verwenden, bei dem das Masseverhältnis (α-Olefine/Isopren) höchsten 30 % und das Masseverhältnis (β-Olefine/Isopren) höchsten 20 % beträgt.

**15.** Verfahren zur Herstellung eines Polyisoprens nach einem der vorhergehenden Ansprüche, **dadurch gekennzeichnet, dass** es darin besteht, einen mit Isopren angereicherten C5-Schnitt zu verwenden, bei dem das Masseverhältnis (1,3-Pentadien/Isopren) höchstens 0,5 % beträgt.

**16.** Verfahren zur Herstellung eines Polyisoprens nach einem der vorhergehenden Ansprüche, **dadurch gekennzeichnet, dass** es darin besteht, einen mit Isopren angereicherten C5-Schnitt zu verwenden, bei dem das Masseverhältnis (disubstituierte Alkine/Isopren) höchsten 0,7 % beträgt.

**17.** Verfahren zur Herstellung eines Polyisoprens nach einem der vorhergehenden Ansprüche, **dadurch gekennzeichnet, dass** es darin besteht, einen mit Isopren angereicherten C5-Schnitt zu verwenden, bei dem das Masseverhältnis (Vinylacetylenverbindungen/Isopren) höchsten 15 ppm (parts per million) beträgt.

**18.** Verfahren zur Herstellung eines Polyisoprens nach einem der vorhergehenden Ansprüche, **dadurch gekennzeichnet, dass** es darin besteht, einen mit Isopren angereicherten C5-Schnitt zu verwenden, bei dem das Masseverhältnis (1,4-Pentadien/Isopren) höchstens 0,2 % beträgt.

**19.** Verfahren zur Herstellung eines Polyisoprens nach einem der vorhergehenden Ansprüche, **dadurch gekennzeichnet, dass** es darin besteht, einen mit Isopren angereicherten C5-Schnitt zu verwenden, bei dem das Masseverhältnis (Cyclopentadien/Isopren) höchsten 5 ppm beträgt.

**20.** Verfahren zur Herstellung eines Polyisoprens nach einem der vorhergehenden Ansprüche, wobei der C5-Schnitt Limonen enthält, **dadurch gekennzeichnet, dass** es darin besteht, einen mit Isopren angereicherten C5-Schnitt zu verwenden, bei dem das Masseverhältnis (Limonen/Isopren) höchstens 2 % beträgt.

**21.** Verfahren zur Herstellung eines Polyisoprens nach einem der vorhergehenden Ansprüche, **dadurch gekennzeichnet, dass** es darin besteht, das katalytische System einzusetzen, damit das Polyisopren einen mit $^{13}$C-Kernresonanz und quantitative Bestimmung mit Infrarot ermittelten Gehalt an cis-1,4-Verknüpfungen von 98,0 bis 99,6 % aufweist.

**Claims**

**1.** A process for obtaining a polyisoprene from a steam-cracked C5 naphtha fraction enriched with isoprene, said process essentially consisting of reacting a catalytic system in the presence of said enriched C5 fraction, **characterised in that** it consists of using:

* a C5 fraction enriched with isoprene such that the mass fraction of isoprene in said enriched fraction lies within a range of from 30% to 95%, and
* a catalytic system based on at least:

- a conjugated diene monomer,
- an organic phosphoric acid salt of one or more rare earth metals,
- an alkylating agent consisting of an alkylaluminium of the formula $AlR_3$ or $HAlR_2$, and
- a halogen donor consisting of an alkylaluminium halide,

said salt being suspended in at least one inert saturated hydrocarbon solvent of aliphatic or alicyclic type which is included in said catalytic system, and the molar ratio (alkylating agent : rare earth salt) being in a range of from 1 to 5.

2.  A process for obtaining a polyisoprene according to Claim 1, **characterised in that** it consists of using a molar ratio (alkylating agent : rare earth salt) which lies within a range of from 1 to 2.

3.  A process for obtaining a polyisoprene according to Claim 1 or 2, **characterised in that** it consists of using, as catalytic system, a system which is such that said rare earth salt is a rare earth tris[bis(2-ethylhexyl)phosphate].

4.  A process for obtaining a polyisoprene according to Claim 3, **characterised in that** it consists of using, as catalytic system, a system which is such that said rare earth salt is neodymium tris[bis(2-ethylhexyl)phosphate].

5.  A process for obtaining a polyisoprene according to one of the preceding claims, **characterised in that** it consists of using, as catalytic system, a system comprising said rare earth metal(s) in a concentration equal or substantially equal to 0.02 mol/l.

6.  A process for obtaining a polyisoprene according to one of the preceding claims, **characterised in that** it consists of using, as catalytic system, a system which is such that the molar ratio (halogen donor : salt) lies within a range of from 2.6 to 3.

7.  A process for obtaining a polyisoprene according to one of the preceding claims, **characterised in that** it consists of using, as catalytic system, a system which is such that the molar ratio (conjugated diene monomer : salt) lies within a range of from 25 to 50.

8.  A process for obtaining a polyisoprene according to one of the preceding claims, **characterised in that** it consists of using, as catalytic system, a system which is such that said conjugated diene monomer is butadiene.

9.  A process for obtaining a polyisoprene according to one of the preceding claims, **characterised in that** it consists of using, as catalytic system, a system which is such that said alkylating agent is diisobutylaluminium hydride.

10.  A process for obtaining a polyisoprene according to one of the preceding claims, **characterised in that** it consists of using, as catalytic system, a system which is such that said halogen donor is diethylaluminium chloride.

11.  A process for obtaining a polyisoprene according to one of the preceding claims, **characterised in that** it consists of using a C5 fraction enriched with isoprene in which the mass fraction of isoprene lies within a range of from 30% to 70%.

12.  A process for obtaining a polyisoprene according to one of the preceding claims, said enriched C5 fraction comprising aliphatic and alicyclic mono-olefins, **characterised in that** it consists of using a C5 fraction enriched with isoprene in which the mass ratio (aliphatic and alicyclic mono-olefins : isoprene) is less than or equal to 50%.

13.  A process for obtaining a polyisoprene according to Claim 12, **characterised in that** it consists of using a C5 fraction enriched with isoprene in which the mass ratio (aliphatic and alicyclic mono-olefins : isoprene) is between 20% and 50%.

14.  A process for obtaining a polyisoprene according to Claim 12, said mono-olefins comprising $\alpha$-olefins and $\beta$-olefins, **characterised in that** it consists of using a C5 fraction enriched with isoprene in which the mass ratio ($\alpha$-olefins : isoprene) is less than or equal to 30%, and in which the mass ratio ($\beta$-olefins: isoprene) is less than or equal to 20%.

15.  A process for obtaining a polyisoprene according to one of the preceding claims, **characterised in that** it consists of using a C5 fraction enriched with isoprene in which the mass ratio (1,3-pentadiene : isoprene) is less than or equal to 0.5%.

16.  A process for obtaining a polyisoprene according to one of the preceding claims, **characterised in that** it consists of using a C5 fraction enriched with isoprene in which the mass ratio (disubstituted alkynes : isoprene) is less than or equal to 0.7%.

**17.** A process for obtaining a polyisoprene according to one of the preceding claims, **characterised in that** it consists of using a C5 fraction enriched with isoprene in which the mass ratio (vinylacetylene compounds : isoprene) is less than or equal to 15 ppm (parts per million).

**18.** A process for obtaining a polyisoprene according to one of the preceding claims, **characterised in that** it consists of using a C5 fraction enriched with isoprene in which the mass ratio (1,4-pentadiene : isoprene) is less than or equal to 0.2%.

**19.** A process for obtaining a polyisoprene according to one of the preceding claims, **characterised in that** it consists of using a C5 fraction enriched with isoprene in which the mass ratio (cyclopentadiene : isoprene) is less than or equal to 5 ppm.

**20.** A process for obtaining a polyisoprene according to one of the preceding claims, said C5 fraction comprising limonene, **characterised in that** it consists of using a C5 fraction enriched with isoprene in which the mass ratio (limonene : isoprene) is less than or equal to 2%.

**21.** A process for obtaining a polyisoprene according to one of the preceding claims, **characterised in that** it consists of using said catalytic system so that said polyisoprene has a cis-1,4 linkage content, measured using carbon-13 nuclear magnetic resonance and mid-infrared analysis, which lies within a range of from 98.0% to 99.6%.